# EUROPÄISCHE PATENTSCHRIFT

(11) **EP 1 935 569 B1**
(45) Veröffentlichungstag und Bekanntmachung des Hinweises auf die Patenterteilung: **19.08.2009**
(21) Anmeldenummer: 07122961.1
(22) Anmeldetag: 12.12.2007
(51) Int. Cl.: B25B 23/147, B25F 5/00, B25B 21/00

(54) **Werkzeuggerät mit einer Rutschkupplung**
Machine tool with a friction clutch
Outil doté d'un accouplement à glissement

(30) Priorität: 21.12.2006 DE 102006000545
(43) Veröffentlichungstag der Anmeldung: 25.06.2008
(73) Patentinhaber: HILTI Aktiengesellschaft, 9494 Schaan (LI)
(72) Erfinder: Spielmann, David, 8808 Pfäffikon (CH); Gerschwiler, Othmar, 9631 Ulisbach (CH); Breitenmoser, Armin, 9630 Wattwill (CH)
(74) Vertreter: Wildi, Roland

(56) Entgegenhaltungen:
- EP-A- 1 524 083
- EP-B- 0 613 758
- JP-A- 54 043 398

## Beschreibung

Die Erfindung betrifft ein Werkzeuggerät mit den Merkmalen gemäss dem Oberbegriff von Patentanspruch 1. Dabei weist das Werkzeuggerät ein Werkzeuggehäuse auf, in dem ein Antrieb untergebracht ist, mittels dem ein Abtriebselement um eine Achse herum mit einem Drehmoment beaufschlagbar ist und an dem eine Rutschkupplung vorgesehen ist. Die Rutschkupplung weist mehrere drehfest an dem Werkzeuggehäuse gehaltene Kupplungselemente auf, die gegen Gegenkupplungselemente eines mit einem Drehmoment beaufschlagbaren Steuerelementes vorgespannt sind. Hierdurch verhindern die Kupplungselemente bis zum Erreichen eines Grenzwertes des Drehmomentes eine Verdrehung des Steuerelementes relativ zum Gerätegehäuse. Dabei ist die an den Kupplungselementen wirkende Vorspannung über ein verdrehbares Stellelement einstellbar und wird durch mehrere separate Federelemente erzeugt.

Bei derartigen Werkzeuggeräten wird auf diese Weise ab einem gewissen Widerstandsmoment, das an dem Abtriebselement angreift, die Übertragung eines vom Antrieb erzeugten Antriebsmomentes auf das Abtriebselement unterbrochen, um Beschädigungen zu vermeiden. Hierbei wird durch die Verwendung mehrerer separater Federelemente eine über die Lebensdauer des Werkzeuggerätes weitestgehend gleich bleibende Federcharakteristik gewährleistet. Hierdurch wird die Drehmomentübertragung des Werkzeuggerätes über seine Lebenszeit hinweg bei einem bestimmten eingestellten Grenzwert des Drehmomentes immer auch bei einem weitestgehend gleich bleibenden tatsächlichen Drehmoment unterbrochen.

Aus der EP 0 613 758 B1 ist ein Werkzeuggerät mit einem Kupplungsmechanismus bekannt, bei dem mehrere Schraubenfedern zu einer ersten Seite gegen kugelförmige Kupplungselemente drücken und sich dabei zu einer zweiten Seite hin gegen einen Kupplungsring abstützen. Der Kupplungsring ist dabei durch Verdrehen in seiner axialen Position verstellbar, um die Vorspannung der Schraubenfedern gegen die Kupplungselemente verändern zu können. Die Schraubenfedern ragen dabei durch gehäusefeste Bohrungen hindurch und sind jeweils bestimmten Kupplungselementen zugeordnet.

Nachteilig an dem bekannten Kupplungsmechanismus ist, dass sie eine grosse Anzahl von Einzelelementen aufweist, die sowohl die Herstellungskosten als auch den Montageaufwand erhöht.

Der vorliegenden Erfindung liegt die Aufgabe zugrunde, bei einem Werkzeuggerät die genannten Nachteile zu vermeiden und eine Rutschkupplung vorzusehen, die bei stabiler Federcharakteristik einen einfachen Aufbau aufweist.

Erfindungsgemäss wird diese Aufgabe durch ein Werkzeuggerät mit den Merkmalen von Patentanspruch 1 gelöst, wobei die Federelemente an einer gegenüber dem Werkzeuggehäuse bewegbaren, gemeinsamen Trägervorrichtung gehalten sind. Auf diese Weise können die Federelemente gemeinsam und unabhängig vom Werkzeuggehäuse gehandhabt werden. Dies ermöglicht einerseits eine einfache Montage, wobei die Federelemente zusammen mit der Trägervorrichtung beispielsweise eine separat zum übrigen Werkzeuggerät hergestellte und vormontierte Baugruppe bilden können. Andererseits können die Federelemente auf diese Weise im eingebauten Zustand auch einem nicht gehäusefesten Element zugeordnet werden, was beispielsweise eine konstruktiv einfachere Vorgehensweise hinsichtlich der verstellbaren Vorspannung ermöglicht.

In einer besonders bevorzugten Ausführungsform ist die Trägervorrichtung durch ein mittels des Stellelementes gegenüber dem Werkzeuggehäuse verdrehbares Führungsgestell gebildet. Hierdurch werden die Federelemente beim Verstellen des Stellelementes gegenüber dem Werkzeuggehäuse mit diesem mitbewegt, was eine konstruktiv einfache Verstellbarkeit der Vorspannung der Federelemente ermöglicht.

Vorteilhafterweise stützen sich die Federelemente dabei zu einer ersten Seite hin an einem ersten Führungsteil des Führungsgestelles und zu einer zweiten Seite hin an einem zweiten Führungsteil des Führungsgestelles ab. Zudem sind die Führungsteile in einer axialen Richtung verschiebbar aneinander geführt. Auf diese Weise sind die Federelemente in einer geschlossenen Vorrichtung angeordnet, deren axiale Erstreckung jedoch veränderlich ist, um die durch die Federelemente erzeugte Vorspannung auf unterschiedliche Werte einstellen zu können.

Bevorzugterweise ist dabei eine Endstellung vorgesehen, in der das erste Führungsteil in axialer Richtung in Anschlag mit dem zweiten Führungsteil steht. Hierdurch kann die Rutschkupplung bei Bedarf auch verriegelt werden, um für bestimmte Anwendungen eine ungewollte Unterbrechung der Drehmomentübertragung vom Antrieb zum Abtrieb verhindern zu können.

Vorteilhafterweise ist zwischen den Führungsteilen ein in Drehrichtung wirkender Formschluss vorgesehen. Hierdurch können Federelemente verwendet werden, die quer zur axialen Richtung eine lediglich geringe Steifigkeit aufweisen, wie beispielsweise Schraubenfedern. Der in Drehrichtung wirkende Formschluss zwischen den Führungsteilen gewährleistet dabei, dass es beim Verdrehen zu keinem seitlichen Ausweichen oder Verkippen der Federelemente kommt.

Ferner sind zur gegenseitigen Führung der Führungsteile vorteilhafterweise an diesen sich axial erstreckende Führungsstege ausgebildet, die mit entsprechend sich axial erstreckenden Führungsaufnahmen zusammen wirken. Dabei können beispielsweise alle Führungsstege an einem der beiden Führungsteile ausgebildet sein, während alle Führungsaufnahmen an dem anderen Führungsteil vorgesehen sind. Alternativ hierzu ist es auch möglich, dass jedes der Führungsteile sowohl einen Teil der Führungsstege als auch einen Teil der Führungsaufnahmen aufweist.

In einer besonders vorteilhaften Ausführungsform ist zwischen der Trägervorrichtung und den Kupplungselementen eine in axialer Richtung verschiebbar aber unverdrehbar gelagerte Zwischenscheibe angeordnet. Hierdurch wird gewährleistet, dass an den Kupplungselementen lediglich axiale Druckspannungen angreifen. Dagegen werden die durch Verdrehen der Trägervorrichtung hervorgerufenen und in Drehrichtung wirkenden Reibspannungen allein an der Zwischenscheibe abgetragen, die sich in Drehrichtung wiederum am Werkzeuggehäuse abstützt.

Ferner ist es günstig, wenn die Trägervorrichtung in Drehrichtung formschlüssig mit dem Stellelement gekoppelt ist, wodurch eine direkte Kraftübertragung vom Stellelement auf die Trägervorrichtung gegeben ist, die eine einfache Konstruktion ermöglicht. Gleichzeitig ist auf diese Weise beim Verstellen des Stellelementes die Vorspannung indirekt erspürbar.

Die Erfindung wird nachstehend anhand eines Ausführungsbeispieles näher erläutert. Es zeigen:
- Fig. 1: eine teilweise geschnittene Ansicht eines erfindungsgemässen Werkzeuggerätes und
- Fig. 2: eine perspektivische Ansicht einer Federvorrichtung zur Beaufschlagung einer Rutschkupplung des Werkzeuggerätes nach Fig. 1

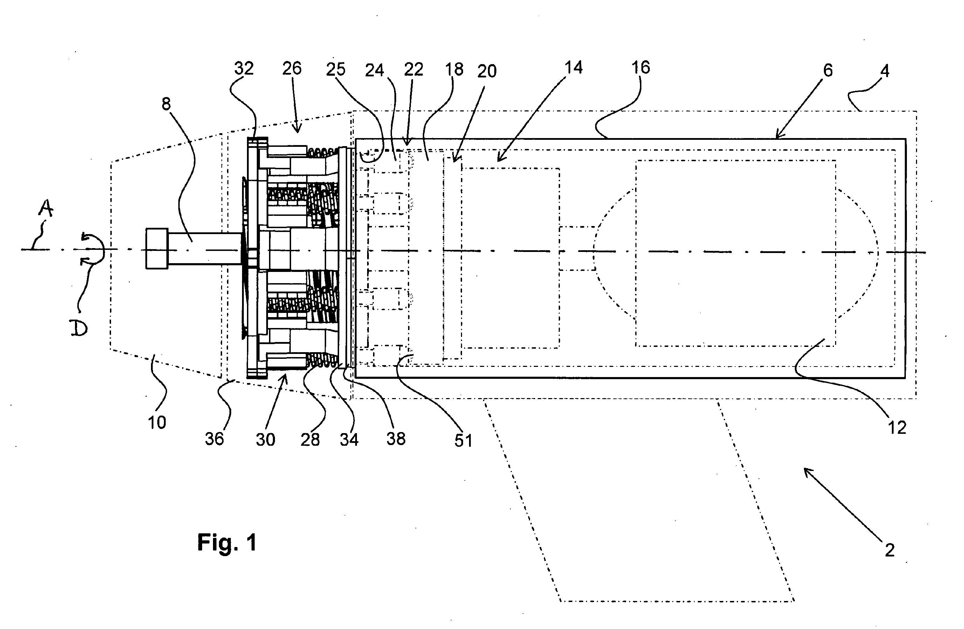

Fig. 1 zeigt ein elektrisch betriebenes Werkzeuggerät 2 beispielsweise in Form eines Schraubgerätes. Dieses weist ein Werkzeuggehäuse 4 auf in dem ein insgesamt mit 6 bezeichneter Antrieb untergebracht ist, der zur Beaufschlagung eines spindelförmigen Abtriebselementes 8 wenigstens mit einem Drehmoment dient. Dabei ist an dem Abtriebselement eine Werkzeugaufnahme 10, wie beispielsweise ein Bohrfutter, gehalten, das auf diese Weise mittels des Antriebs 6 um eine Achse A herum in eine Drehbewegung versetzbar ist. Der Antrieb 6 weist hierzu einen Motor 12 und ein Getriebe 14 auf, die in einem Antriebsgehäuse 16 untergebracht sind, das gegenüber dem Werkzeuggehäuse 4 fest gelagert ist.

Ferner weist der Antrieb ein Steuerelement 18, beispielsweise in Form eines Planetengetrieberinges auf, das mit lediglich schematisch dargestellten Getriebemitteln 20, beispielsweise in Form einer Stufe von Planetenzahnrädern, zusammenwirkt.

Zwischen dem Steuerelement 18 und dem Antriebsgehäuse 16 ist eine insgesamt mit 22 bezeichnete Rutschkupplung vorgesehen, die mehrere Kupplungselemente 24, beispielsweise in Form von Stiften, Kugeln oder Kombinationen daraus aufweisen. Diese Kupplungselemente 24 sind in axialer Richtung gegen das Steuerelement 18 vorgespannt und axial verschiebbar aber drehfest in Aufnahmebohrungen 25 des Antriebsgehäuses 16 gehalten. Die Vorspannung wird dabei mittels einer Federvorrichtung 26 erzeugt, die mehrere Federelemente 28 in Form von Schraubenfedern aufweist.

Die Federvorrichtung 26 ist als vormontierbare Baugruppe ausgelegt und weist hierzu eine Trägervorrichtung 30 auf, an der alle Federelemente 28 parallel zueinander ausgerichtet gehalten sind. Hierbei ist die Trägervorrichtung 30 als zweiteiliges Führungsgestell ausgebildet, das ein erstes Führungsteil 32 und ein zweites Führungsteil 34 aufweist, die sich gegenseitig axial verschiebbar aber drehfest führen. Die parallelen Federelemente 28 stützen sich dabei zu einer Seite am ersten Führungsteil 32 und zur anderen Seite am zweiten Führungsteil 34 ab.

Ferner ist die Trägervorrichtung 30 in nicht näher dargestellter Weise über das erste Führungsteil 32 mit einem hülsenförmigen Stellelement 36 in Drehrichtung D um die Achse A herum bewegungsgekoppelt. Dieses Stellelement 36 ist verdrehbar am Werkzeuggehäuse 4 gehalten und dient zur bedarfsweisen Einstellung der Vorspannung mit der die Trägervorrichtung 30 über das zweite Führungsteil 34 unter Zwischenlage einer Zwischenscheibe 38 gegen die Kupplungselemente 24 drückt.

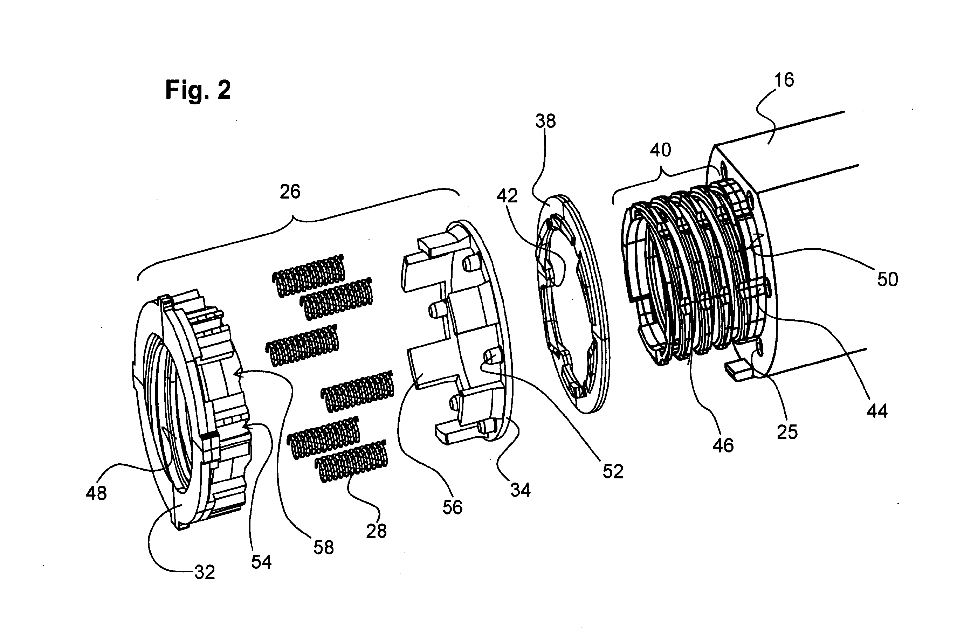

Wie aus Fig. 2 zu entnehmen ist, ist die Zwischenscheibe 38 ringförmig ausgebildet und wird bei der Montage auf einen Gehäusehals 40 des Antriebsgehäuses 16 aufgeschoben. Dabei greifen sich radial nach innen erstreckende Nocken 42 in entsprechend positionierte, achsparallele Längsnuten 44, die in den Gehäusehals 40 eingelassen sind. Auf diese Weise wird die Zwischenscheibe 38 axial verschiebbar aber drehfest am Antriebsgehäuse 16 beziehungsweise gegenüber dem Werkzeuggehäuse 4 gehalten.

Zudem ist an dem Gehäusehals 40 ein Aussengewinde 46 ausgebildet, das mit einem Innengewinde 48 des ersten Führungsteils 32 zusammenwirkt. Beim Verdrehen des Stellelementes 36 wird die mit diesem über das erste Führungsteil 32 drehgekoppelte Federvorrichtung 26 insgesamt relativ zum Antriebsgehäuse 16 verdreht. Infolge des Zusammenwirkens mit dem Aussengewinde 46 wird dabei das erste Führungsteil 32 auch in axialer Richtung gegenüber dem Antriebsgehäuse 16 bewegt. Hierdurch ist der axiale Abstand des ersten Führungsteils 32 zum zweiten Führungsteil 34 verstellbar, das sich unter Zwischenlage der Zwischenscheibe 38 an einer Stirnseite 50 des Antriebsgehäuses 16 abstützt, in die die Aufnahmebohrungen 25 der Kupplungselemente 24 eingelassen sind. Auf diese Weise wird mit Veränderung des Abstandes zwischen den beiden Führungsteilen 32, 34 die durch die Federvorrichtung 26 erzeugte Vorspannung verstellt.

Mit dem Einstellen der Vorspannung der Federvorrichtung 26 wird gleichzeitig ein Grenzwert für das vom Antrieb 6 aus das Abtriebselement 8 übertragbare Drehmoment festgelegt, bei dessen Erreichen die Kupplungselemente 24 gegen die eingestellte Vorspannung aus Gegenkupplungselementen 51 heraus bewegt werden, die beispielsweise muldenförmig in das Steuerelement 18 eingelassen sind. Die Kupplungselemente 24 werden hierbei durch die Aufnahmebohrungen 25 geschoben, wobei sie die Zwischenscheibe 38 gegen die Vorspannung der Federvorrichtung 26 verschieben und ausser Eingriff mit den Gegenkupplungselementen 51 kommen. Hieraus resultiert eine Drehbewegung des Steuerelementes 18 gegenüber dem Antriebsgehäuse 16, durch die die Drehmomentübertragung vom Antrieb 6 auf das Abtriebselement 8 am Getriebe 14 unterbrochen wird.

Wie aus Fig. 2 ferner zu entnehmen ist, weisen die Führungsteile 32, 34 zur Positionierung der Federelemente 28 teilweise Zentriernocken 52 auf, die die Federelemente 28 aufsteckbar sind, und teilweise Aufnahmemittel 54 auf, in die die Federelemente 28 bereichsweise einsteckbar sind. Zudem ragen von einem der Führungsteile 32, 34 in axialer Richtung Führungsstege 56 ab, die mit sich ebenfalls axial erstreckenden Führungsaufnahmen 58 zusammen wirken, um einerseits einen in Drehrichtung D wirkenden Formschluss herzustellen und andererseits eine gegenseitige axiale Führung sicherzustellen. Insgesamt wird auf diese Weise sichergestellt, dass sich die Federelemente 28 lediglich in axialer Richtung verformen.

Die axiale Erstreckung der Führungsstege 56 und der Führungsaufnahmen 58 ist dabei so ausgelegt, dass die Führungsteile 32, 34 in einer Endstellung unabhängig von den Federelementen 28 direkt aneinander anliegen und dadurch einen gegenseitigen harten Anschlag bilden. In dieser Endstellung sind die Kupplungselemente 24 in Eingriff mit den Gegenkupplungselementen 51 arretiert, so dass hier keine Unterbrechung der Drehmomentübertragung bei Überschreitung eines Grenzwertes des Drehmomentes erfolgt. Das heisst in dieser Stellung ist die Funktion der Rutschkupplung 22 abgeschaltet.

## Patentansprüche

1. Werkzeuggerät (2)
mit einem Werkzeuggehäuse (4) in dem ein Antrieb (6) untergebracht ist, mittels dem ein Abtriebselement (8) um eine Achse (A) herum mit einem Drehmoment beaufschlagbar ist und an dem eine Rutschkupplung (22) vorgesehen ist,
die mehrere gegenüber dem Werkzeuggehäuse (4) drehfest gehaltene Kupplungselemente (24) aufweist, die gegen Gegenkupplungselemente (51) eines mit einem Drehmoment beaufschlagbaren Steuerelementes (18) vorgespannt sind, um dieses bis zum Erreichen eines Grenzwertes des Drehmomentes gegen eine Verdrehung zu sichern,
wobei die Vorspannung über ein Stellelement (36) einstellbar und mittels mehrerer separater Federelemente (28) erzeugt ist,
**dadurch gekennzeichnet, dass** die Federelemente (28) an einer gegenüber dem Werkzeuggehäuse (4) bewegbaren, gemeinsamen Trägervorrichtung (30) gehalten sind.

2. Werkzeuggerät nach Anspruch 1, **dadurch gekennzeichnet, dass** die Trägervorrichtung (30) durch ein mittels des Stellelementes (36) gegenüber dem Werkzeuggehäuse (4) verdrehbares Führungsgestell gebildet ist.

3. Werkzeuggerät nach Anspruch 2, **dadurch gekennzeichnet, dass** sich die Federelemente (28) zu einer ersten Seite hin an einem ersten Führungsteil (32) und zu einer zweiten Seite hin an einem zweiten Führungsteil (34) des Führungsgestelles abstützen, wobei die Führungsteile (32, 34) in einer axialen Richtung verschiebbar aneinander geführt sind.

4. Werkzeuggerät nach Anspruch 3, **dadurch gekennzeichnet, dass** das erste Führungsteil (32) in einer Endstellung in axialer Richtung in Anschlag mit dem zweiten Führungsteil (34) bringbar ist.

5. Werkzeuggerät nach Anspruch 3 oder 4, **dadurch gekennzeichnet, dass** zwischen den Führungsteilen (32, 34) ein in Drehrichtung (D) wirkender Formschluss vorgesehen ist.

6. Werkzeuggerät nach einem der Ansprüche 3 bis 5, **dadurch gekennzeichnet, dass** zur gegenseitigen Führung der Führungsteile (32, 34) an diesen sich axial erstreckende Führungsstege (56) ausgebildet sind, die mit entsprechend sich axial erstreckenden Führungsaufnahmen (58) zusammen wirken.

7. Werkzeuggerät nach einem der Ansprüche 2 bis 6, **dadurch gekennzeichnet, dass** zwischen der Trägervorrichtung (30) und den Kupplungselementen (24) eine in axialer Richtung verschiebbar aber unverdrehbar gelagerte Zwischenscheibe (38) angeordnet ist.

8. Werkzeuggerät nach einem der Ansprüche 1 bis 7, **dadurch gekennzeichnet, dass** die Trägervorrichtung (30) in Drehrichtung (D) formschlüssig mit dem Stellelement (36) gekoppelt ist.

## Claims

1. Power tool (2), comprising a tool housing (4) accommodating a drive (6) for applying a torque to an output element (8) about an axis (A) and provided with a friction safety clutch (22) having a plurality of clutch elements (24) secured against rotation relative to the tool housing (4), the clutch elements are pretensioned against mating clutch elements (51) of a control element (18) to which a torque can be applied in order to secure the control element (18) against rotation until a torque limit value has been reached, wherein the pretension can be adjusted by means of an adjusting element (36) and is produced by means of a plurality of separate spring elements (28), **characterised in that** the spring elements (28) arc held on a common supporting device (30) movable relative to the tool housing (4).

2. Power tool according to claim 1, **characterised in that** the supporting device (30) is formed by a guide frame rotatable relative to the tool housing (4) by means of the adjusting element (36).

3. Power tool according to claim 2, **characterised in that** the spring elements (28) are supported at a first end against a first guide part (32) and at a second end against a second guide part (34) of the guide frame, the guide parts (32, 34) being guided in an axially displaceable manner relative to one another.

4. Power tool according to claim 3, **characterised in that** the first guide part (32) can be moved up against the second guide part (34) in an end position in the axial direction.

5. Power tool according to claim 3 or 4, **characterised in that** a form-closed connection acting in the rotational direction (D) is provided between the guide parts (32, 34).

6. Power tool according to one of claims 3 to 5, **characterised by** axially extending guide bars (56) provided on the guide parts (32, 34) for the mutual guiding thereof and cooperating with corresponding axially extending guide receivers (58).

7. Power tool according to one of claims 2 to 6, **characterised in that** an intermediate disc (38) mounted in such a manner that it is displaceable in the axial direction, but is secured against rotation is arranged between the supporting device (30) and the clutch elements (24).

8. Power tool according to one of claims 1 to 7, **characterised in that** the supporting device (30) is coupled form-closcd to the adjusting element (36) in the rotational direction (D).

## Revendications

1. Appareil (2) comprenant un carter d'appareil (4) dans lequel est logé un moyen d'entraînement (6) à l'aide duquel un élément mené (8) peut être soumis à un couple autour d'un axe (A) et sur lequel est prévu un moyen d'accouplement glissant (22), lequel comporte plusieurs éléments d'accouplement (24) solidarisés en rotation au carter d'appareil (4) et précontraintes contre des éléments d'accouplement conjugués (51) d'un élément de commande (18) pouvant être soumis à un couple afin d'empêcher celui-ci de tourner jusqu'à l'atteinte d'une valeur limite du couple, la précontrainte pouvant être réglée par l'intermédiaire d'un élément de réglage (36) et étant produite au moyen de plusieurs éléments de ressorts séparées (28), **caractérisé en ce que** les éléments de ressorts (28) sont maintenus par un dispositif porteur commun (30) mobile par rapport au carter d'appareil (4).

2. Appareil selon la revendication 1, **caractérisé en ce que** le dispositif porteur (30) est formé par un bâti de guidage pouvant être tourné par rapport au carter d'appareil (4) au moyen de l'élément de réglage (36).

3. Appareil selon la revendication 2, **caractérisé en ce que** les éléments de ressorts (28) prennent appui, vers un premier côté, contre une première partie de guidage (32) et, vers un second côté, contre une seconde partie de guidage (34) du bâti de guidage, les parties de guidage (32, 34) étant guidées de manière mutuellement coulissante dans une direction axiale.

4. Appareil selon la revendication 3, **caractérisé en ce que,** dans une position extrême, la première partie de guidage (32) peut être amenée, dans la direction axiale, en butée avec la seconde partie de guidage (34).

5. Appareil selon la revendication 3 ou 4, **caractérisé en ce qu'**entre les parties de guidage (32, 34) est prévue une liaison par complémentarité de formes qui agit dans le sens de rotation (D).

6. Appareil selon une des revendications 3 à 5, **caractérisé en ce que** pour le guidage mutuel des parties de guidage (32, 34) sont prévues sur celles-ci des nervures de guidage (56) qui s'étendent axialement et qui coopèrent avec des logements de guidage (58) s'étendant axialement de manière correspondante.

7. Appareil selon une des revendications 2 à 6, **caractérisé en ce qu'**entre le dispositif porteur (30) et les éléments d'accouplement (24) est disposée une bague intermédiaire (38) qui est montée à coulissement dans la direction axiale, mais sans possibilité de rotation.

8. Appareil selon une des revendications 1 à 7, **caractérisé en ce que** le dispositif porteur (30) est accouplé par complémentarité de formes à l'élément de réglage (36) dans la direction de rotation (D).
